# FASCICULE DE BREVET EUROPEEN

(11) **EP 4 265 940 B1**
(45) Date de publication et mention de la délivrance du brevet: **09.10.2024**
(21) Numéro de dépôt: 23168337.6
(22) Date de dépôt: 17.04.2023
(51) Int. Cl.: F16H 57/08

(54) **REDUCTEUR MECANIQUE POUR UNE TURBOMACHINE D'AERONEF**
MECHANISCHES REDUKTIONSGETRIEBE FÜR EINE FLUGZEUGTURBOMASCHINE
MECHANICAL REDUCTION GEAR FOR AN AIRCRAFT TURBINE ENGINE

(30) Priorité: 22.04.2022 FR 2203777
(43) Date de publication de la demande: 25.10.2023
(73) Titulaire: Safran Transmission Systems, 92700 Colombes (FR); SAFRAN AIRCRAFT ENGINES, 75015 Paris (FR)
(72) Inventeur: SIMON, Adrien Louis, 77550 MOISSY-CRAMAYEL (FR); CHATENET, Luc Henri, 77550 MOISSY-CRAMAYEL (FR); MORELLI, Boris Pierre Marcel, 77550 MOISSY-CRAMAYEL (FR); ROUFFET, Jonathan Jean-Pierre, 77550 MOISSY-CRAMAYEL (FR)
(74) Mandataire: Gevers & Orès

(56) Documents cités:
- WO-A1-2017/115795
- DE-A1- 102019 125 052

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 008 463, FR-A1-3 041 054, FR-A1-3 095 251, FR-A1-3 111 390, FR-A1 -3 111 400, WO-A1-2017/115795 et DE-A1-10 2019 125052.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique. Il existe plusieurs types d'engrènement par contact comme avec des dentures droites, hélicoïdales ou en chevron.

L'augmentation des rapports de réduction des architectures des moteurs cibles pousse à utiliser des réducteurs dits « double étage ». En effet, au-delà d'un rapport de l'ordre de 7, la technologie dite « simple étage » perd son intérêt car n'est plus assez compacte. Il faut alors utiliser des réducteurs dits « double étage ».

Dans une technologie simple étage, c'est la même denture d'un satellite qui coopère avec le solaire et la couronne. Dans une technologie double étage, la denture du satellite qui coopère avec le solaire est différente de la denture du satellite qui coopère avec la couronne. En général, les dentures d'un satellite qui coopèrent respectivement avec le solaire et la couronne ont des diamètres moyens différents.

En fonctionnement, le solaire est autocentré sur l'axe X, quelle que soit le type de denture de ce solaire (droite, hélicoïdale, chevron). Le solaire se positionne naturellement entre les satellites dont le nombre est en général supérieur ou égal à trois.

L'utilisation d'une denture droite n'assure aucun positionnement axial des pignons entre eux, qui sont donc libres axialement et peuvent aller frotter en contact avec d'autres composants. L'utilisation d'une denture hélicoïdale peut générer des efforts axiaux non négligeables dans les pignons, qui peuvent être sollicités en direction axiale. Pour pallier ces phénomènes, des butées axiale peuvent être prévues dans le réducteur pour limiter la course de déplacement axial notamment du solaire. Cependant, cette butée n'assure pas le centrage du solaire en direction radiale.

L'utilisation d'une denture en chevron permet de positionner naturellement les pignons en direction axiale et de ne pas utiliser de butées axiales. Cependant, elle n'assure pas non plus le centrage du solaire en direction radiale.

Sous certains cas de charge, il arrive que le réducteur se désaligne fortement, générant une force de rappel importante et donc des surcharges importantes dans les dentures. Pour pallier à ce phénomène, il est possible d'assouplir les pièces d'interface jusqu'à un certain point qui affecte potentiellement le comportement dynamique du réducteur et du moteur, générant également des surcharges sur les dentures et dans le moteur.

La présente invention propose un perfectionnement qui permet de répondre à tout ou partie des problèmes de la technique antérieure, et qui est simple, efficace et économique.

### Résumé de l'invention

L'invention concerne un réducteur mécanique de turbomachine, en particulier d'aéronef, ce réducteur comportant :
- un solaire ayant un premier axe de rotation, ce solaire comportant des cannelures internes et une denture externe,
- une couronne qui s'étend autour du solaire et qui comprend une denture interne,
- des satellites qui sont agencés entre le solaire et la couronne et qui comprennent chacun au moins une denture externe d'engrènement avec ladite denture externe du solaire et ladite denture interne de la couronne, et
- un porte-satellites qui porte des premiers paliers de guidage en rotation des satellites autour de seconds axes parallèles au premier axe,
caractérisé en ce qu'il comprend en outre au moins un second palier de guidage en rotation du solaire, ledit au moins un second palier étant monté entre le solaire et le porte-satellites.

Comme évoqué dans ce qui précède, les dentures, de préférence en chevron, permettent d'avoir un auto-centrage du solaire en fonctionnement en direction axiale. L'ajout d'un ou de palier(s) de guidage du solaire permet de le centrer en direction radiale et d'éviter les risques de désalignements du solaire.

L'invention est compatible :
- d'un réducteur simple étage ou à plusieurs étages,
- d'un réducteur dit épicycloïdal, planétaire ou différentiel,
- de tout type de porte-satellites qu'il soit monobloc ou de type cage et porte-cage, et
- de tout type de palier satellite, qu'il soit composé d'éléments roulants, d'un palier hydrodynamique, etc.

Le réducteur selon l'invention peut comprendre une ou plusieurs des caractéristiques suivantes, prises isolément les unes des autres, ou en combinaison les unes avec les autres :
- le solaire comprend un premier prolongement tubulaire axial qui s'étend sur un côté du solaire et sur lequel est monté ledit au moins un second palier ;
- le solaire comprend un second prolongement tubulaire axial qui s'étend sur un côté opposé du solaire et sur lequel est monté un autre second palier ;
- les premier et second prolongements comprennent des surfaces cylindriques externes de montage des seconds paliers, qui ont un même diamètre ;
- les premier et second prolongements comprennent des surfaces cylindriques externes de montage des seconds paliers, qui ont des diamètres différents ;
   -- la surface cylindrique de plus grand diamètre est situé du même côté que les cannelures du solaire ;
- les seconds paliers sont à une distance axiale l'un de l'autre, qui est inférieure à une dimension axiale desdits premiers paliers ou desdits satellites ;
- les cannelures et ladite denture du solaire sont traversées par un même plan médian perpendiculaire au premier axe ;
   -- ledit plan médian est un plan de symétrie du solaire ;
- les cannelures et ladite denture du solaire sont traversées par deux plans distincts qui sont perpendiculaires au premier axe, ledit au moins un second palier ou l'un desdits seconds paliers étant situé axialement entre ces deux plans ;
- ledit au moins un second palier est un palier à roulement ou un palier lisse ;
   -- ledit au moins un second palier autorise un degré de liberté en direction axiale ;
   -- ledit au moins un second palier est un palier à rouleaux ;
- les satellites sont disposés autour dudit au moins un second palier ;
- les seconds paliers sont au nombre de un ou deux :
   -- la denture du solaire comprend deux séries annulaires de dents séparées l'un de l'autre par une gorge annulaire externe ;
   -- ledit au moins un second palier a un diamètre interne inférieur au diamètre interne de la denture du solaire, et un diamètre externe supérieur au diamètre externe de la denture du solaire ;
   -- les deux seconds paliers ont des diamètres identiques ;
- les deux seconds paliers sont situés sur deux extrémités axiales opposées du solaire et sont situés entre deux troisièmes paliers de guidage du porte-satellites ;
- les seconds et troisièmes paliers sont de types différents, et par exemple à roulements différents ;
- les seconds et troisièmes paliers ont des diamètres différents ;
   -- ledit au moins un second palier a sa bague interne qui est intégrée dans le solaire et en particulier son prolongement ou l'un de ses prolongements ;
   -- ledit au moins un second palier a sa bague externe qui est intégrée dans le porte-satellites et en particulier un rebord cylindrique de ce porte-satellites ;
   -- la denture du solaire est une denture en chevron ;
   -- la denture de la couronne est une denture en chevron ;
   -- ladite au moins une denture de chaque satellite est une denture en chevron ;
   -- le solaire est le seul solaire du réducteur qui comprend donc un unique solaire ;
   -- le solaire est guidé par deux seconds paliers qui sont disposés de part et d'autre de la denture du solaire.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique, du type à simple étage,
[Fig.3] la figure 3 est une autre vue partielle en coupe axiale d'un réducteur mécanique, du type à double étage,
[Fig.4] la figure 4 est une vue schématique en coupe axiale et en perspective d'un réducteur mécanique, du type à double étage symétrique,
[Fig.5] la figure 5 est une autre vue schématique en coupe axiale du réducteur de la figure 4,
[Fig.6] la figure 6 est une vue partielle en coupe axiale d'un réducteur mécanique, du type à simple étage, et illustre un premier mode de réalisation de l'invention,
[Fig.7] la figure 7 est une vue schématique en coupe axiale d'un réducteur mécanique, du type à double étage symétrique, et illustre un second mode de réalisation de l'invention,
[Fig.8] la figure 8 est une vue schématique en coupe axiale d'un réducteur mécanique, du type à double étage symétrique, et illustre une variante de réalisation de l'invention,
[Fig.9] la figure 9 est une vue schématique en coupe axiale d'un réducteur mécanique, du type à double étage symétrique, et illustre une variante de réalisation de l'invention,
[Fig.10] la figure 10 est une vue schématique en coupe axiale d'un réducteur mécanique, du type à double étage symétrique, et illustre une variante de réalisation de l'invention,
[Fig.11] la figure 11 est une vue schématique en coupe axiale d'un réducteur mécanique, du type à double étage symétrique, et illustre une variante de réalisation de l'invention.

### Description détaillée de l'invention

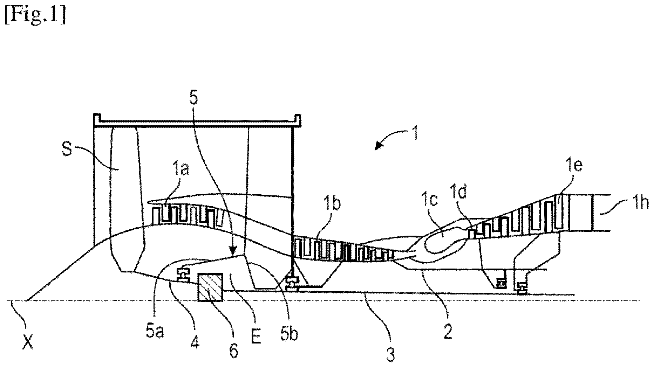

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire, épicycloïdal voire différentiel.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

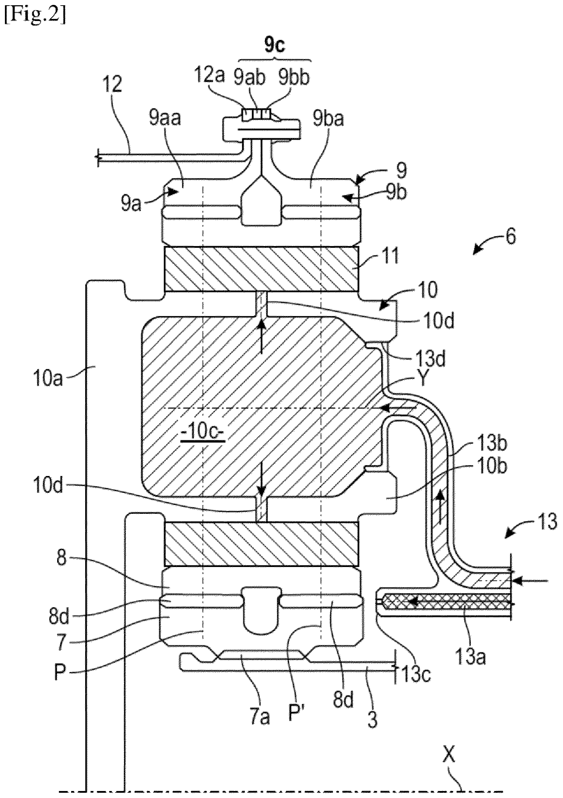

La figure 2 montre un réducteur à train épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
▪ dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
▪ une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

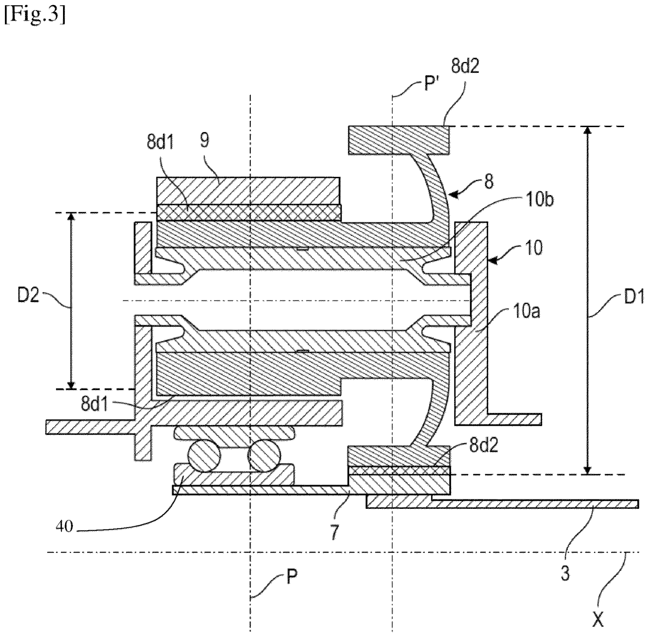

La figure 3 montre un autre exemple d'architecture de réducteur, dit à double étage d'engrènement, dans lequel chaque satellite 8 comprend deux dentures 8d1, 8d2 distinctes configurées pour coopérer respectivement avec la couronne 9 et le solaire 7.

Dans cette figure 3, les éléments déjà décrits dans ce qui précède sont désignés par les mêmes références.

La denture 8d1 d'engrènement avec la couronne 9 a un diamètre moyen noté D2 et est situé dans un plan médian P. La denture 8d2 d'engrènement avec le solaire 7 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 8d1, 8d2 comprend ici une seule hélice. Ces hélices n'étant pas alignées entre elles, à contrario de dentures en chevron, il est nécessaire d'ajouter une butée axiale 40. Cette butée 40 se présente ici sous la forme d'un palier de butée et plus particulièrement d'un palier à billes.

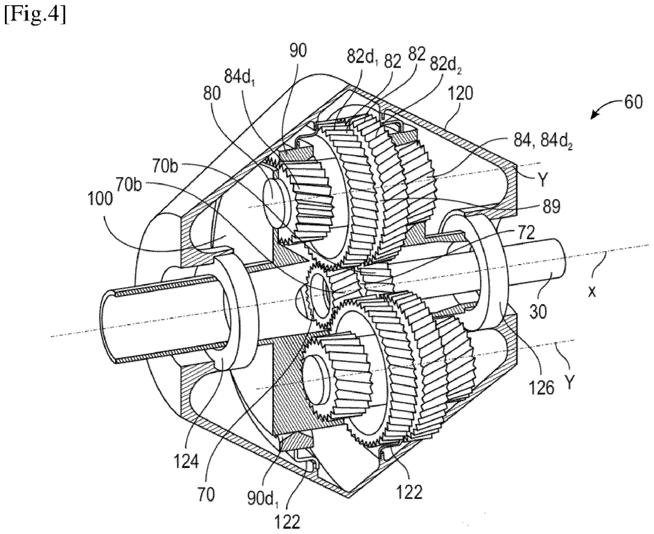

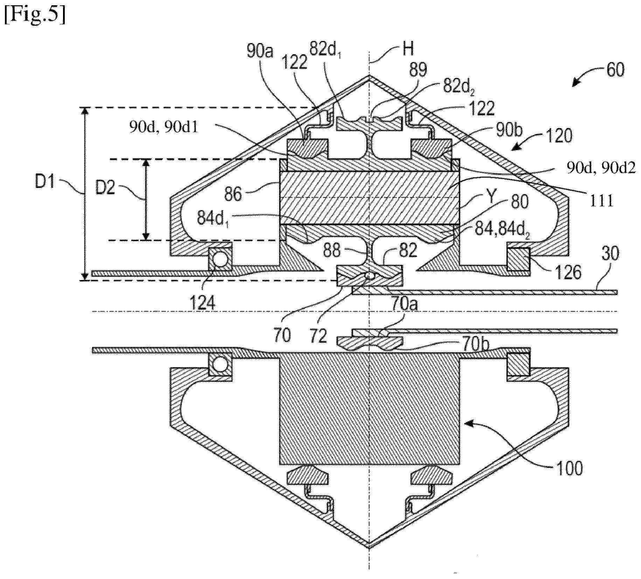

Les figures 4 et 5 montrent un autre exemple d'architecture de réducteur, dit à double étage symétrique.

Le réducteur 60 des figures 4 et 5 comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 5).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture 90d qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des dents 90d1, 90d2.

Dans l'exemple représenté, le porte couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représente la moyenne entre le diamètre maximal et le diamètre minimal d'une denture de ce satellite.

Chaque satellite 80 comprend un corps cylindrique 86 et un voile annulaire 88 s'étendant sensiblement radialement vers l'extérieur depuis le milieu de ce corps 86. La denture 84 est séparée en deux séries de dents 84d1, 84d2 en chevron qui sont situées respectivement sur les extrémités axiales du corps 86. La denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

La « symétrie » des dentures des satellites du réducteur permet de symétriser les efforts axiaux ainsi que les moments auxquels les satellites sont soumis en fonctionnement.

L'invention propose un perfectionnement aux technologies décrites dans ce qui précède et illustrées aux figures 2 à 5.

L'invention propose d'ajouter au réducteur mécanique au moins un palier de guidage et de centrage du solaire.

Le réducteur comprend déjà des paliers, que l'on peut dénommer premiers paliers, et qui servent au guidage et au centrage des satellites. Le réducteur selon l'invention comprend un autre ou d'autres paliers, que l'on peut dénommer second(s) palier(s), et qui serve(nt) au guidage et au centrage du solaire. Les premiers et second(s) paliers sont différents. Les premiers et second(s) paliers peuvent être tous portés par le porte-satellites ou montés dans le porte-satellites, chacun des premiers paliers s'étendant à l'intérieur d'un satellite et le ou chacun des second paliers s'étendant de préférence autour du solaire et/ou au niveau de l'une des (ou des deux) extrémités axiales du solaire. Par ailleurs, comme illustré aux figures 4 et 5, le réducteur peut comprendre des troisièmes paliers de guidage du porte-couronne vis-à-vis du porte-satellite.

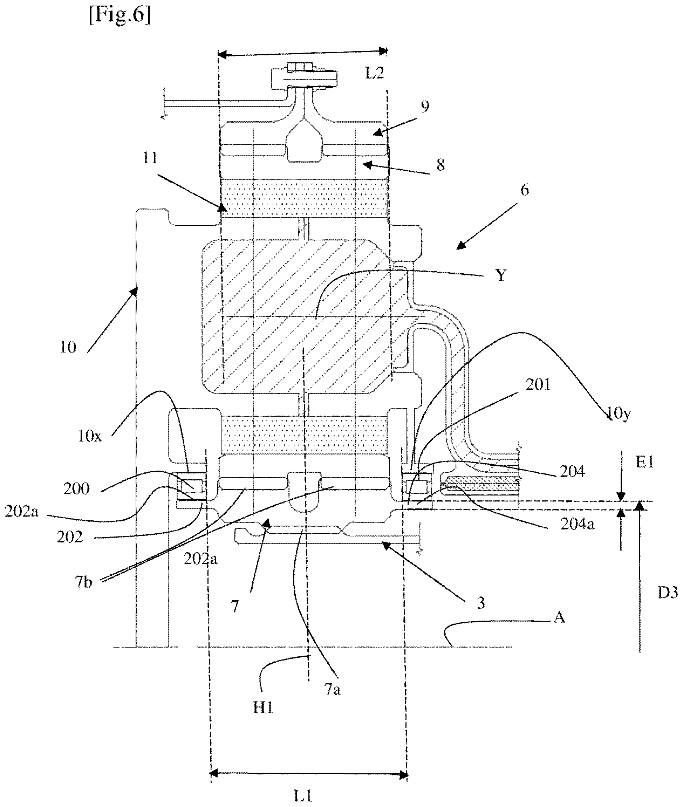

La figure 6 illustre un premier mode de réalisation de l'invention dans le cadre d'un réducteur à simple étage d'engrènement. Dans la description qui va suivre en référence à cette figure, la description qui précède faite en relation avec la figure 2 s'applique également et concerne l'invention dans la mesure où elle n'est pas contraire à ce qui suit.

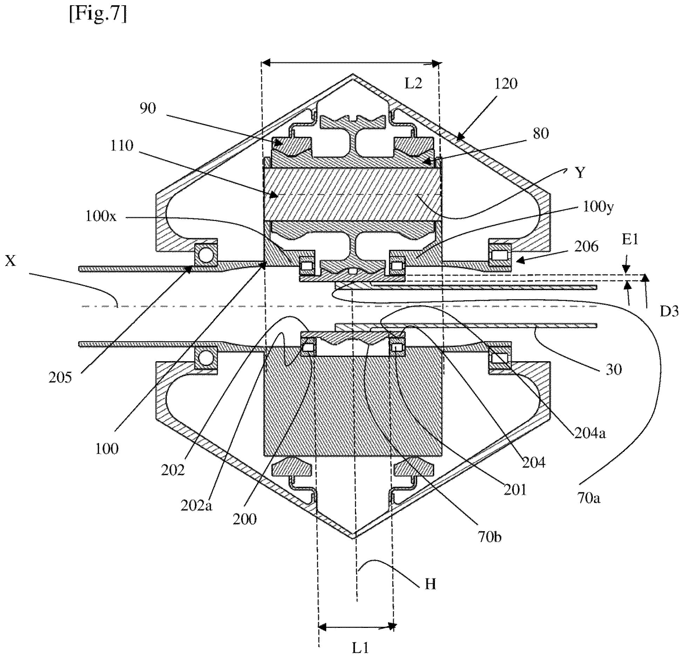

De la même façon, les figures 7 à 11 illustrent un second mode et des variantes de réalisation de l'invention dans le cadre d'un réducteur à double étage d'engrènement. Dans la description qui va suivre en référence à ces figures, la description qui précède faite en relation avec les figures 4 et 5 s'applique également et concerne l'invention dans la mesure où elle n'est pas contraire à ce qui suit.

Le solaire 7 de la figure 6 comprend des cannelures internes 7a et une denture externe 7b en chevron. On définit par H1 un plan médian passant par le milieu du solaire 7 et perpendiculaire à l'axe X. H1 passe par le milieu de la denture 7b et par le milieu des cannelures 7a. La denture 7b est en chevron et comprend deux séries de dents, respectivement amont et aval, qui sont séparées par une gorge annulaire externe 7c. Les séries de dents sont symétriques par rapport au plan H1.

Le solaire 7 est centré et guidé en rotation autour de l'axe X par deux paliers, respectivement amont 200 et aval 201. Ces paliers 200, 201 sont montés entre le solaire 7 et le porte-satellites 10, et plus exactement entre des prolongements axiaux 202, 204 du solaire 7 et le porte-satellites 10.

Le solaire 7 comprend ainsi un prolongement axial amont 202 qui est tubulaire et qui comprend une surface cylindrique externe 202a sur laquelle est montée une bague interne du palier amont 200. La bague externe de ce palier 200 est en appui radial sur un rebord cylindrique 10x du porte-satellites 10. Ce rebord 10x s'étend par exemple en saillie depuis une paroi radiale du porte-satellites 10.

Le solaire 7 comprend un prolongement axial aval 204 qui est tubulaire et qui comprend une surface cylindrique externe 204a sur laquelle est montée une bague interne du palier aval 201. La bague externe 200b de ce palier 201 est en appui radial sur un rebord cylindrique 10y du porte-satellites 10. Ce rebord 10y borde par exemple l'orifice central du porte-satellites 10 qui est traversé par l'arbre 3.

Dans l'exemple représenté, les paliers 200, 201 sont identiques et les surfaces 202a, 204a ont un même diamètre D3. Les paliers 200, 201 sont ici des paliers à roulement et plus précisément à rouleaux. De préférence, chacun de ces paliers autorise un degré de liberté du solaire 7 en direction axiale vis-à-vis du porte-satellites 10.

Les paliers 200, 201 sont à une distance axiale L1 l'un de l'autre, qui est inférieure à une dimension axiale L2 des satellites 8 ou de leurs paliers 11. Les paliers 200, 201 ont un diamètre interne inférieur au diamètre interne de la denture 7b du solaire 7, et un diamètre externe supérieur au diamètre externe de la denture 7b du solaire 7. Les satellites 8 sont agencés autour de ces paliers 200, 201.

Les prolongements 202, 204 peuvent avoir une épaisseur radiale E1 inférieure à celle du reste du solaire 7, comme illustré dans le dessin.

Le solaire 70 de la figure 7 comprend des cannelures internes 70a et une denture externe 70b en chevron. Le plan H passe par le milieu de la denture 70b et par le milieu des cannelures 70a. La denture 70b est en chevron et comprend deux séries de dents, respectivement amont et aval, qui sont séparées par une gorge annulaire externe 72. Les séries de dents sont symétriques par rapport au plan H.

Le solaire 70 est centré et guidé en rotation autour de l'axe X par deux paliers, respectivement amont 200 et aval 201. Ces paliers 200, 201 sont montés entre le solaire 70 et le porte-satellites 100, et plus exactement entre des prolongements axiaux 202, 204 du solaire et le porte-satellites 100.

Le solaire 70 comprend ainsi un prolongement axial amont 202 qui est tubulaire et qui comprend une surface cylindrique externe 202a sur laquelle est montée une bague interne 200a du palier amont 200. La bague externe 200b de ce palier 200 est en appui radial sur un rebord cylindrique 100x du porte-satellites 100. Ce rebord 100x s'étend par exemple en saillie depuis une paroi radiale du porte-satellites 100.

Le solaire 70 comprend un prolongement axial aval 204 qui est tubulaire et qui comprend une surface cylindrique externe 204a sur laquelle est montée une bague interne 201a du palier aval 200. La bague externe 200b de ce palier 201 est en appui radial sur un rebord cylindrique 100y du porte-satellites 10. Ce rebord 100y s'étend par exemple en saillie depuis une paroi radiale du porte-satellites 100 et peut border par exemple l'orifice central du porte-satellites 100 qui est traversé par l'arbre 30.

Dans l'exemple représenté, les paliers 200, 201 sont identiques et les surfaces 202a, 204a ont un même diamètre D3. Les paliers 200, 201 sont ici des paliers à roulement et plus précisément à rouleaux. De préférence, chacun de ces paliers autorise un degré de liberté du solaire 70 en direction axiale vis-à-vis du porte-satellites 100.

Les paliers 200, 201 sont à une distance axiale L1 l'un de l'autre, qui est inférieure à une dimension axiale L2 des satellites 80 ou de leurs paliers 110. Les paliers 200, 201 ont un diamètre interne inférieur au diamètre interne de la denture 70b du solaire 70, et un diamètre externe supérieur au diamètre externe de la denture 70b du solaire 70. Les satellites 80 sont agencés autour de ces paliers 200, 201.

Les prolongements 202, 204 peuvent avoir une épaisseur radiale E1 inférieure à celle du reste du solaire 70, comme illustré dans le dessin.

La figure 7 montre également que les paliers 200, 201, qui sont situés sur les deux extrémités axiales opposées du solaire 70, sont situés entre deux autres paliers 205, 206, appelés troisième paliers, qui servent au guidage du porte-satellites 100 ici par rapport au porte-couronne 120.

Les paliers 200, 201, 205, 206 peuvent être de types différents (lisses, à roulement, etc.), et sont par exemple à roulements différents (rouleaux, billes, etc.). Dans l'exemple représenté, le palier 205 est à billes et le palier 206 est à rouleaux. Les paliers 200, 201, 205, 206 peuvent avoir des diamètres différents.

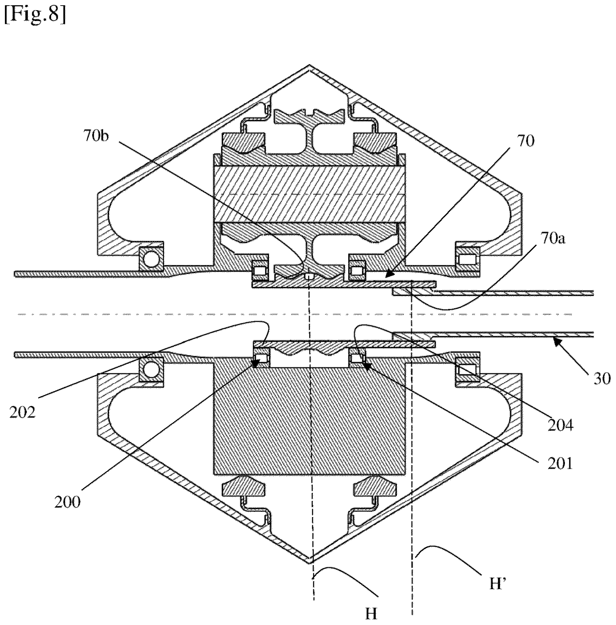

Le solaire 70 de la figure 8 diffère de celui de la figure 7 essentiellement en ce que ses cannelures 70a sont situées à une extrémité axiale, ici aval, du solaire 70. Le palier 201 est ainsi situé axialement entre la denture 70b et les cannelures 70a. Autrement dit, les dentures 70b sont traversées par le plan H, les cannelures 70a sont traversées par un plan H' distinct, et le palier 201 est situé entre ces plans H, H'.

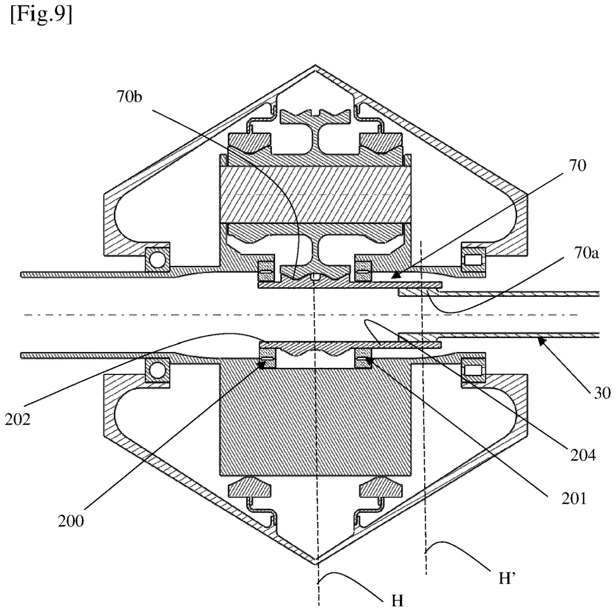

Le solaire 70 de la figure 9 diffère de celui de la figure 8 essentiellement en ce que les paliers 200, 201 sont des paliers lisses et non pas à roulement.

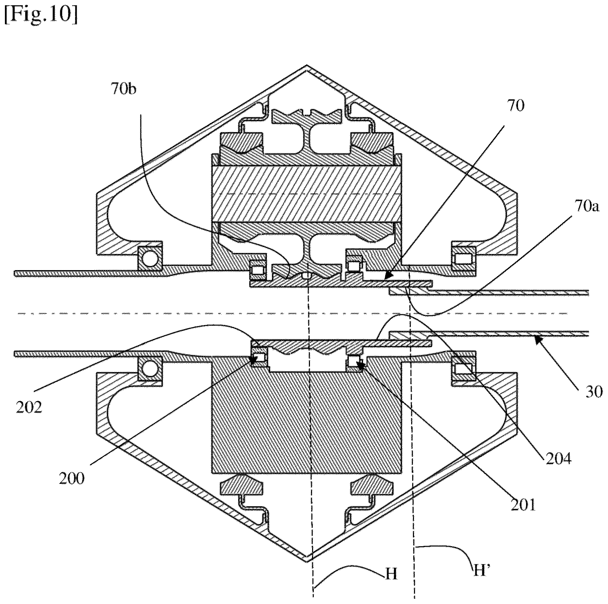

Le solaire 70 de la figure 10 diffère de celui de la figure 8 essentiellement en ce que les surfaces cylindriques 202a, 204a des prolongements 202, 204 sur lesquelles sont montées les paliers 200, 201 ont des diamètres différents. La surface 204a de plus grand diamètre est située à l'aval et donc le palier 201 de plus grand diamètre est situé à l'aval, à savoir du côté de l'arbre 30.

La bague interne du palier 201 est en outre ici intégrée au solaire 70 et en particulier au prolongement 204.

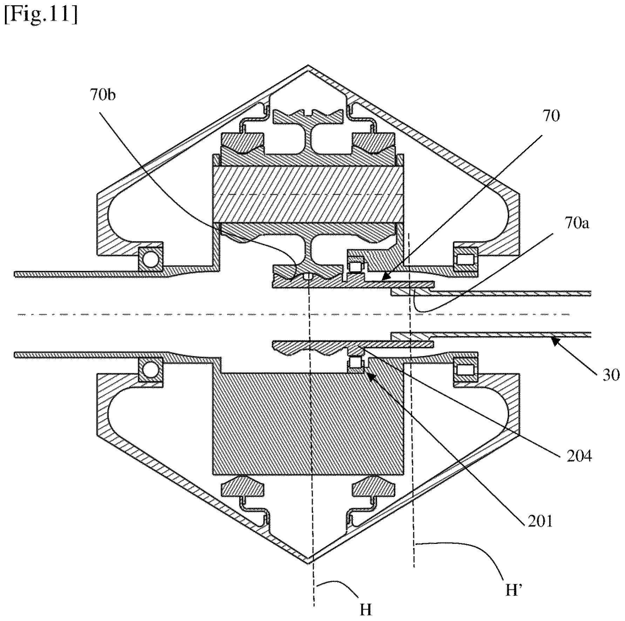

Le solaire 70 de la figure 11 diffère de celui de la figure 10 essentiellement en ce que le palier amont 200 est absent. Le solaire 70 est donc centré et guidé par un seul palier 201, ici aval, et ce solaire 70 comprend un seul prolongement axial 204 aval de support de ce palier 201.

## Revendications

1. Réducteur mécanique (6, 60) pour une turbomachine (1), en particulier d'aéronef, ce réducteur comportant :
- un solaire (7, 70) ayant un premier axe (X) de rotation, ce solaire comportant des cannelures internes (7a, 70a) et une denture externe (7b, 70b),
- une couronne (9, 90) qui s'étend autour du solaire (7, 70) et qui comprend une denture interne (9d, 90d),
- des satellites (8, 80) qui sont agencés entre le solaire et la couronne et qui comprennent chacun au moins une denture externe (8d) d'engrènement avec ladite denture externe du solaire et ladite denture interne de la couronne, et
- un porte-satellites (10, 100) qui porte des premiers paliers (11, 110) de guidage en rotation des satellites autour de seconds axes (Y) parallèles au premier axe (X),
**caractérisé en ce qu'**il comprend en outre au moins un second palier (200, 201) de guidage en rotation du solaire (7, 70), ledit au moins un second palier (200, 201) étant monté entre le solaire (7, 70) et le porte-satellites (10, 100).

2. Réducteur mécanique (6, 60) selon la revendication 1, dans lequel le solaire (7, 70) comprend un premier prolongement tubulaire axial (202, 204) qui s'étend sur un côté du solaire et sur lequel est monté ledit au moins un second palier (200, 201).

3. Réducteur mécanique (6, 60) selon la revendication 2, dans lequel le solaire (7, 70) comprend un second prolongement tubulaire axial (202, 204) qui s'étend sur un côté opposé du solaire et sur lequel est monté un autre second palier (200, 201).

4. Réducteur mécanique (6, 60) selon la revendication 3, dans lequel les premier et second prolongements (202, 204) comprennent des surfaces cylindriques externes (202a, 204a) de montage des seconds paliers (200, 201), qui ont un même diamètre.

5. Réducteur mécanique (6, 60) selon la revendication 3, dans lequel les premier et second prolongements (202, 204) comprennent des surfaces cylindriques externes (202a, 204a) de montage des seconds paliers (200, 201a), qui ont des diamètres différents.

6. Réducteur mécanique (6, 60) selon l'une des revendications 3 à 5, dans lequel les seconds paliers (200, 201) sont à une distance axiale (L1) l'un de l'autre, qui est inférieure à une dimension axiale (L2) desdits premiers paliers (11) ou desdits satellites (8, 80).

7. Réducteur mécanique (60) selon l'une des revendications 1 à 6, dans lequel les cannelures (7a, 70a) et ladite denture (7b, 70b) du solaire (7, 70) sont traversées par un même plan médian (H1, H) perpendiculaire au premier axe (X).

8. Réducteur mécanique (6, 60) selon l'une des revendications 1 à 6, dans lequel les cannelures (7a, 70a) et ladite denture (7b, 70b) du solaire (7, 70) sont traversées par deux plans distincts (H1, H2) qui sont perpendiculaires au premier axe (X), ledit au moins un second palier (200, 201) ou l'un desdits seconds paliers étant situé axialement entre ces deux plans.

9. Réducteur mécanique (6, 60) selon l'une des revendications précédentes, dans lequel ledit au moins un second palier (200, 201) est un palier à roulement ou un palier lisse.

10. Réducteur mécanique (6, 60) selon l'une des revendications précédentes, dans lequel les satellites (8, 80) sont disposés autour dudit au moins un second palier (200, 201).

11. Réducteur mécanique (6, 60) selon l'une des revendications précédentes, dans lequel ledit au moins un second palier (200, 201) est au nombre de un ou deux.

12. Réducteur mécanique (6, 60) selon la revendication précédente, dans lequel les deux seconds paliers (200, 201) sont situés sur deux extrémités axiales opposées du solaire (7, 70) et sont situés entre deux troisièmes paliers (205, 206) de guidage du porte-satellites (10, 100).

13. Réducteur mécanique (6, 60) selon la revendication précédente, dans lequel les seconds et troisièmes paliers (200, 201, 205, 206) sont de types différents, et par exemple à roulements différents.

14. Réducteur mécanique (6, 60) selon la revendication 12 ou 13, dans lequel les seconds et troisièmes paliers (200, 201, 205, 206) ont des diamètres différents.

15. Turbomachine (1), en particulier d'aéronef, comportant un réducteur mécanique (6, 60) selon l'une des revendications précédentes.

## Patentansprüche

1. Mechanisches Untersetzungsgetriebe (6, 60) für ein Turbotriebwerk (1), insbesondere eines Luftfahrzeugs, wobei dieses Untersetzungsgetriebe umfasst:
- ein Sonnenrad (7, 70), das eine erste Drehachse (X) aufweist, wobei dieses Sonnenrad innere Kerbverzahnungen (7a, 70a) und eine äußere Verzahnung (7b, 70b) umfasst,
- einen Kranz (9, 90), der sich um das Sonnenrad (7, 70) herum erstreckt und der eine innere Verzahnung (9d, 90d) umfasst,
- Planetenräder (8, 80), die zwischen dem Sonnenrad und dem Kranz angeordnet sind und die jeweils mindestens eine äußere Verzahnung (8d) zum Kämmen mit der äußere Verzahnung des Sonnenrads und der innere Verzahnung des Kranzes umfassen, und
- einen Planetenträger (10, 100), der erste Lager (11, 110) zur Drehführung der Planetenräder um zur ersten Achse (X) parallele zweite Achsen (Y) trägt,
**dadurch gekennzeichnet, dass** es weiter mindestens ein zweites Lager (200, 201) zur Drehführung des Sonnenrads (7, 70) umfasst, wobei das mindestens eine zweite Lager (200, 201) zwischen dem Sonnenrad (7, 70) und dem Planetenträger (10, 100) angebracht ist.

2. Mechanisches Untersetzungsgetriebe (6, 60) nach Anspruch 1, wobei das Sonnenrad (7, 70) eine erste rohrförmige axiale Verlängerung (202, 204) umfasst, die sich auf einer Seite des Sonnenrads erstreckt und an der das mindestens eine zweite Lager (200, 201) angebracht ist.

3. Mechanisches Untersetzungsgetriebe (6, 60) nach Anspruch 2, wobei das Sonnenrad (7, 70) eine zweite rohrförmige axiale Verlängerung (202, 204) umfasst, die sich auf der gegenüberliegenden Seite des Sonnenrads erstreckt und an der ein weiteres zweites Lager (200, 201) angebracht ist.

4. Mechanisches Untersetzungsgetriebe (6, 60) nach Anspruch 3, wobei die erste und die zweite Verlängerung (202, 204) zylindrische Außenflächen (202a, 204a) zum Anbringen der zweiten Lager (200, 201) umfassen, die denselben Durchmesser aufweisen.

5. Mechanisches Untersetzungsgetriebe (6, 60) nach Anspruch 3, wobei die erste und die zweite Verlängerung (202, 204) zylindrische Außenflächen (202a, 204a) zum Anbringen der zweiten Lager (200, 201a) umfassen, die unterschiedliche Durchmesser aufweisen.

6. Mechanisches Untersetzungsgetriebe (6, 60) nach einem der Ansprüche 3 bis 5, wobei sich die zweiten Lager (200, 201) in einem axialen Abstand (L1) zueinander befinden, der kleiner ist als eine axiale Abmessung (L2) der ersten Lager (11) oder der Planetenräder (8, 80).

7. Mechanisches Untersetzungsgetriebe (60) nach einem der Ansprüche 1 bis 6, wobei die Kerbverzahnungen (7a, 70a) und die Verzahnung (7b, 70b) des Sonnenrads (7, 70) von derselben Mittelebene (H1, H) durchquert werden, die zur ersten Achse (X) senkrecht steht.

8. Mechanisches Untersetzungsgetriebe (6, 60) nach einem der Ansprüche 1 bis 6, wobei die Kerbverzahnungen (7a, 70a) und die Verzahnung (7b, 70b) des Sonnenrads (7, 70) von zwei verschiedenen Ebenen (H1, H2) durchquert werden, die zur ersten Achse (X) senkrecht stehen, wobei sich das mindestens eine zweite Lager (200, 201) oder eines der zweiten Lager axial zwischen diesen zwei Ebenen befindet.

9. Mechanisches Untersetzungsgetriebe (6, 60) nach einem der vorstehenden Ansprüche, wobei das mindestens eine zweite Lager (200, 201) ein Wälzlager oder ein Gleitlager ist.

10. Mechanisches Untersetzungsgetriebe (6, 60) nach einem der vorstehenden Ansprüche, wobei die Planetenräder (8, 80) um das mindestens eine zweite Lager (200, 201) herum angeordnet sind.

11. Mechanisches Untersetzungsgetriebe (6, 60) nach einem der vorstehenden Ansprüche, wobei das mindestens eine zweite Lager (200, 201) eines oder zwei an der Zahl ist.

12. Mechanisches Untersetzungsgetriebe (6, 60) nach dem vorstehenden Anspruch, wobei sich die zwei zweiten Lager (200, 201) an zwei gegenüberliegenden axialen Enden des Sonnenrads (7, 70) befinden und sich zwischen zwei dritten Führungslagern (205, 206) des Planetenträgers (10, 100) befinden.

13. Mechanisches Untersetzungsgetriebe (6, 60) nach dem vorstehenden Anspruch, wobei die zweiten und die dritten Lager (200, 201, 205, 206) von unterschiedlicher Arten sind und zum Beispiel unterschiedliche Wälzkörper aufweisen.

14. Mechanisches Untersetzungsgetriebe (6, 60) nach Anspruch 12 oder 13, wobei die zweiten und die dritten Lager (200, 201, 205, 206) unterschiedliche Durchmesser aufweisen.

15. Turbotriebwerk (1), insbesondere eines Luftfahrzeugs, das ein mechanisches Untersetzungsgetriebe (6, 60) nach einem der vorstehenden Ansprüche umfasst.

## Claims

1. A mechanical reducer (6, 60) for a turbomachine (1), in particular for an aircraft, this reducer comprising:
- a sun gear (7, 70) having a first axis (X) of rotation, this sun gear comprising internal splines (7a, 70a) and an external toothing (7b, 70b),
- a ring gear (9, 90) which extends around the sun gear (7, 70) and which comprises an internal toothing (9d, 90d),
- planet gears (8, 80) which are arranged between the sun gear and the ring gear and which each comprise at least one external toothing (8d) meshing with said external toothing of the sun gear and said internal toothing of the ring gear, and
- a planet carrier (10, 100) which carries first bearings (11, 110) for guiding the planet gears in rotation about second axes (Y) parallel to the first axis (X),
**characterised in that** it further comprises at least one second bearing (200, 201) for guiding the sun gear (7, 70) in rotation, said at least one second bearing (200, 201) being mounted between the sun gear (7, 70) and the planet carrier (10, 100).

2. The mechanical reducer (6, 60) according to claim 1, wherein the sun gear (7, 70) comprises a first axial tubular extension (202, 204) which extends to one side of the sun gear and on which the at least one second bearing (200, 201) is mounted.

3. The mechanical reducer (6, 60) according to claim 2, wherein the sun gear (7, 70) comprises a second axial tubular extension (202, 204) which extends on an opposite side of the sun gear and on which is mounted a further second bearing (200, 201).

4. The mechanical reducer (6, 60) according to claim 3, wherein the first and second extensions (202, 204) comprise external cylindrical surfaces (202a, 204a) for mounting the second bearings (200, 201), which have a same diameter.

5. The mechanical reducer (6, 60) according to claim 3, wherein the first and second extensions (202, 204) comprise external cylindrical surfaces (202a, 204a) for mounting the second bearings (200, 201a), which have different diameters.

6. The mechanical reducer (6, 60) according to any of claims 3 to 5, wherein the second bearings (200, 201) are at an axial distance (L1) from each other, which is smaller than an axial dimension (L2) of said first bearings (11) or of said planet gears (8, 80).

7. The mechanical reducer (60) according to one of claims 1 to 6, wherein the splines (7a, 70a) and said toothing (7b, 70b) of the sun gear (7, 70) are passed through by a same median plane (H1, H) perpendicular to the first axis (X).

8. The mechanical reducer (6, 60) according to one of claims 1 to 6, wherein the splines (7a, 70a) and said toothing (7b, 70b) of the sun gear (7, 70) are passed through by two distinct planes (H1, H2) which are perpendicular to the first axis (X), said at least one second bearing (200, 201) or one of said second bearings being located axially between these two planes.

9. The mechanical reducer (6, 60) according to any of the preceding claims, wherein said at least one second bearing (200, 201) is a rolling bearing or a plain bearing.

10. The mechanical reducer (6, 60) according to any of the preceding claims, wherein the planet gears (8, 80) are arranged around said at least one second bearing (200, 201).

11. The mechanical reducer (6, 60) according to any of the preceding claims, wherein the second bearings (200, 201) are one or two in number.

12. The mechanical reducer (6, 60) according to the preceding claim, wherein the two second bearings (200, 201) are located on two opposite axial ends of the sun gear (7, 70) and are located between two third bearings (205, 206) for guiding the planet carrier (10, 100).

13. The mechanical reducer (6, 60) according to the preceding claim, wherein the second and third bearings (200, 201, 205, 206) are of different types, and for example with different rollings.

14. The mechanical reducer (6, 60) according to claim 12 or 13, wherein the second and third bearings (200, 201, 205, 206) have different diameters.

15. A turbomachine (1), in particular for aircraft, comprising a mechanical reducer (6, 60) according to one of the preceding claims.
